# EUROPEAN PATENT APPLICATION

(11) **EP 2 154 443 A1**
(43) Date of publication of application: **17.02.2010**
(21) Application number: 08738756.9
(22) Date of filing: 24.03.2008
(51) Int. Cl.: F24H 1/00, F24H 1/18, F24H 9/00, F28D 7/10

(54) **HEATING HOT WATER SUPPLY APPARATUS**

(30) Priority: 30.03.2007 JP 2007091322; 18.03.2008 JP 2008069840
(71) Applicant: Daikin Industries, Ltd., Osaka 530-8323 (JP)
(72) Inventor: FURUI, Syuuji, Sakai-shi Osaka 591-8511 (JP); NUMATA, Mitsuharu, Sakai-shi Osaka 591-8511 (JP)
(74) Representative: HOFFMANN EITLE
(86) International application number: PCT/JP2008/055417
(87) International publication number: WO 2008/123188

(57) **Abstract**

A heating and hot water supply apparatus is provided with a heat pump unit (2), a water storage tank (1), a heat exchanger (10) in the water tank and pipe lines (31, 32). Hot water stored in the water storage tank (1) by being guided by the pipe line (32) passes through a radiator (30) outside the water storage tank (1), then returns into the storage tank (1) by being guided by the pipe line (31) for circulation. Thus, the radiator (30) can directly use heat of large quantity hot water stored in the water storage tank (1).

## Description

### TECHNICAL FIELD

The present invention relates to a heating and hot water supply apparatus to be used for heating and hot water supply.

### BACKGROUND ART

Conventionally, there is provided a heating and hot water supply apparatus as disclosed in JP 2004-232914 A. This heating and hot water supply apparatus includes a heat pump, a hot water tank for storing hot water heated by the heat pump, a heat exchanger placed only in an upper region within the hot water tank, and a heater connected to the heat exchanger.

The hot water tank is connected to a faucet via a hot water outlet pipe. Opening the faucet allows hot water stored in the hot water tank to be taken out from the faucet.

The heater performs heating operation by using the hot water stored in the hot water tank. More specifically, when the heating operation is started, a heating medium in the heat exchanger is heated by the hot water contained in the hot water tank. The heated heating medium is fed to the heater to radiate heat indoors from the heater.

However, in this conventional heating and hot water supply apparatus, which performs heating operation as an additional function of a hot water supply apparatus using midnight electric power, heat to be radiated indoors is derived from the hot water in the hot water tank via the heat exchanger during the heating operation. As a result, efficiency of heat derivation is worsened. This means that heat of the hot water in the hot water tank cannot be efficiently supplied to the heater.

Therefore, the conventional heating and hot water supply apparatus described above has a problem that with 24-hour heating operation in winter, enough heating cannot be fulfilled in regions, such as Nordic countries, which have high heating loads involving a heating load to hot water supply load ratio of 10 : 1.

### SUMMARY OF INVENTION

### Technical Problem

Accordingly, an object of the present invention is to provide a heating and hot water supply apparatus capable of fulfilling enough heating even in regions of high heating loads such as Nordic countries.

### Solution to Problem

There is provided, according to an aspect of the invention, a heating and hot water supply apparatus comprising:
a heat pump unit;
a hot water tank for storing therein hot water heated by the heat pump unit;
an in-tank heat exchanger placed in the hot water tank and arranged and configured such that supply hot water flows through an interior of the in-tank heat exchanger; and
circulation circuits for circulating the hot water stored in the hot water tank such that the hot water passes through a heating terminal outside the hot water tank and thereafter returns into the hot water tank.

According to the heating and hot water supply apparatus of this invention, when heating operation is started, hot water stored in the hot water tank flows to a heating terminal via a circulation path, and returns to the hot water tank again. Thus, heat of the hot water is radiated indoors via the heating terminal. That is, the heating terminal directly extracts heat of the hot water in the hot water tank and radiates the heat indoors.

Therefore, the heat of the hot water in the hot water tank is supplied to the heating terminal with high efficiency, and the heating and hot water supply apparatus is enabled to fulfill enough heating even in such regions of high heating loads as Nordic countries.

In the prior art, heat was extracted via the heat exchanger in the hot water tank and supplied to the heating terminal, resulting in worse efficiency as well as impossibility of fulfilling enough heating.

In one embodiment, the hot water tank is a cylindrical-shaped member and an aspect ratio of the hot water tank, which is a ratio of an inner height to an inner diameter of the hot water tank, is 4.0 or more.

In one embodiment, the in-tank heat exchanger is so arranged and configured that temperature of stored water stored in the hot water tank, which temperature varies due to heat exchange between the stored water and flow-through water flowing through the interior of the in-tank heat exchanger, is lower in a lower side in the hot water tank and higher in an upper side in the hot water tank.

In one embodiment, the in-tank heat exchanger is formed of a tubular member, and a lower-side portion of the in-tank heat exchanger is smaller in tubular inner diameter than an upper-side portion of the in-tank heat exchanger and an in-tube water flow velocity of the lower-side portion is higher than an in-tube water flow velocity of the upper-side portion.

In one embodiment,a lower-side portion of the in-tank heat exchanger is formed of an internally grooved tube.

In one embodiment, the in-tank heat exchanger is formed of a coiled tubular member, and a coil density of a lower-side portion of the in-tank heat exchanger is higher than a coil density of an upper-side portion of the in-tank heat exchanger.

In one embodiment, the in-tank heat exchanger is formed of a coiled tubular member, and a portion of the coiled tubular member is formed into a spiral shape in a vertical direction, the spiral shape having a height difference smaller than a tubular outer diameter, such that the spiral shape portion serves as a resistive member against vertical flow of the stored water stored in the hot water tank.

In one embodiment, a baffle member for restricting vertical water flow in the hot water tank is provided at an intermediate height position higher than an opening for a lower-position side water pipe in the hot water tank.

In one embodiment, the baffle member comprises a transverse plate member for vertically dividing an internal space of the hot water tank.

In one embodiment, the baffle member comprises a vertical plate member for diametrally dividing an internal space of the hot water tank.

In one embodiment, the baffle member comprises a transverse plate member for vertically dividing an internal space of the hot water tank and a vertical plate member for diametrally dividing the internal space of the hot water tank.

### Advantageous Effects of Invention

According to the heating and hot water supply apparatus of the invention, hot water stored in the hot water tank is fed to the heating terminal through the circulation path so that heat of the hot water is supplied to the heating terminal efficiently without passing through the heat exchanger. Thus, the heating and hot water supply apparatus is enabled to fulfill enough heating in such regions of high heating loads as Nordic countries where 24-hour heating operation is involved in winter.

### BRIEF DESCRIPTION OF DRAWINGS

Fig. 1 is an explanatory view of a heating and hot water supply apparatus according to a first embodiment of the present invention;
Fig. 2 is a graph showing a relationship between the aspect ratio and the in-tank water convection action of a water storage tank;
Fig. 3 is an explanatory view of a heating and hot water supply apparatus according to a second embodiment of the invention;
Fig. 4 is an explanatory view of a heating and hot water supply apparatus according to a third embodiment of the invention; and
Fig. 5 is an explanatory view of a heating and hot water supply apparatus according to a fourth embodiment of the invention.

### DESCRIPTION OF EMBODIMENTS

A heating and hot water supply apparatus according to an embodiment of the invention has a first characteristic that hot water in the hot water tank is not used for purposes involving direct contact with the human body, and hot water heated indirectly by an in-tank heat exchanger provided in the hot water tank is used for purposes involving direct contact with the human body.

Also, the heating and hot water supply apparatus has a second characteristic that an aspect ratio of the hot water tank (a ratio of an inner height H to inner diameter D of the hot water tank = H/D) is specified for the hot water tank to suppress uniformization of water temperatures in the hot water tank so that water temperature on the lower side (radiative heat exchanger inlet side of the heat pump unit) within the hot water tank is maintained a specified temperature or more lower than water temperature on the upper side (so as to ensure as large a temperature difference as possible between condensed refrigerant and water to be heated in the radiative heat exchanger of the heat pump unit).

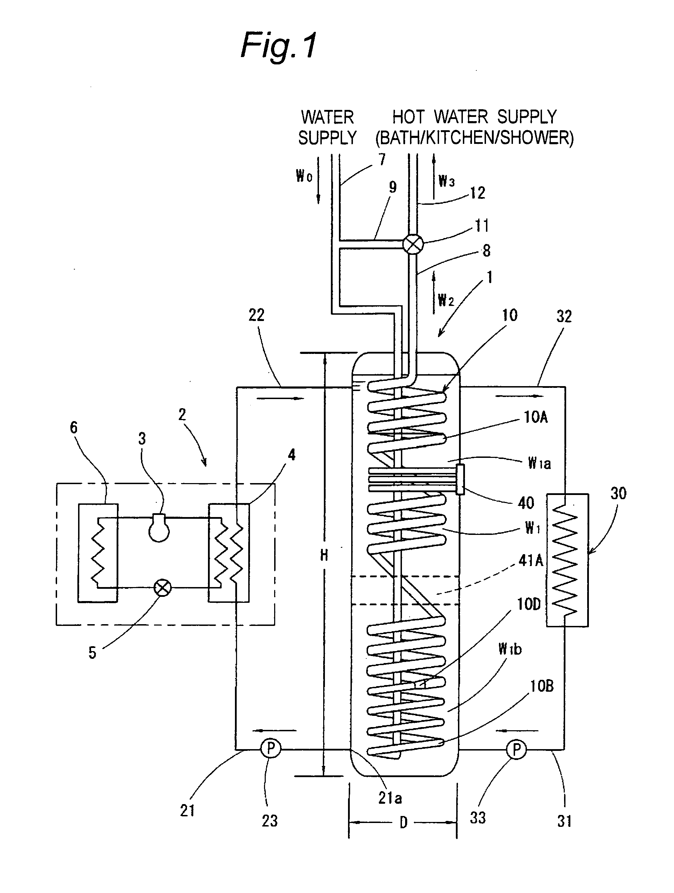

More specifically, the heating and hot water supply apparatus according to the first embodiment of the invention, as illustrated in Fig. 1, includes: a heat pump unit 2 having a compressor 3 for compressing a refrigerant, a radiative heat exchanger 4 for condensing the compressed refrigerant to radiate heat, and an endothermic heat exchanger 6 for evaporating the condensed refrigerant and absorbing heat from the air; and a water storage tank 1 which is connected to the heat pump unit 2 via a lower-position side water pipe 21 and a higher-position side water pipe 22 and in which stored water W₁, i.e. hot water heated by the radiative heat exchanger 4 is stored and moreover which is internally provided with an in-tank heat exchanger 10 for performing heat exchange with the stored water W₁ to heat flow-through water W₂, i.e. supply hot water flowing through the interior of the in-tank heat exchanger 10, wherein the water storage tank aspect ratio (H/D), i.e., a ratio of the inner height H to the inner diameter D ratio of the water storage tank 1, is set to 4.0 or more. It is noted that the water storage tank 1 is an example of the hot water tank. Also, the in-tank heat exchanger 10 in the water storage tank is an example of the in-tank heat exchanger in the hot water tank.

With the heating and hot water supply apparatus of the first embodiment constructed as described above, hot water to be supplied directly toward the human body as in baths, kitchens, shower baths and the like is obtained by the flow-through water (supply hot water) W₂ flowing through the in-tank heat exchanger 10 provided in the water storage tank 1, and the (scale-containing) in-tank stored water (hot water) W₁ staying within the water storage tank 1 is never supplied directly toward the human body as in the conventional heating and hot water supply apparatus.

Also with the heating and hot water supply apparatus of the first embodiment, the aspect ratio (H/D) of the water storage tank 1 is set to 4.0 or more to suppress vertical water flows within the water storage tank 1 so that uniformization of water temperatures of the stored water W₁ within the water storage tank 1 is suppressed. Therefore, in the water storage tank 1, water temperature on the lower (bottom portion) side is maintained lower than that of the upper (top portion) side by the most possible extent, making it possible to supply heated water of a relatively low temperature to the radiative heat exchanger 4 of the heat pump unit 2. As a result, heating efficiency by the heat pump unit 2 can be improved.

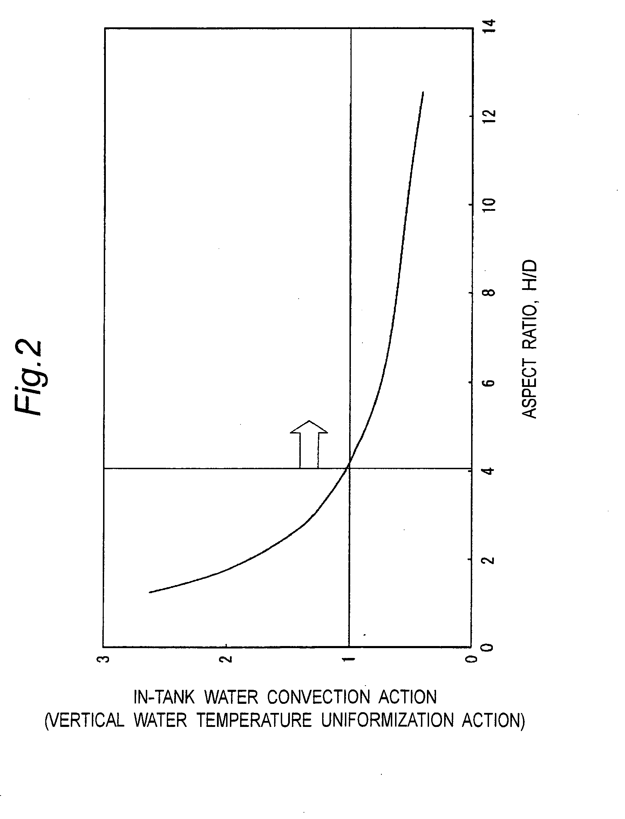

In this connection, Fig. 2 is a graph showing a relationship between the aspect ratio H/D, which is a ratio of the inner height H to the inner diameter D of the water storage tank 1, and the water convection action in the water storage tank 1. The graph shows that, generally, the water convection action (vertical water-temperature uniformization action) in the water storage tank 1 becomes more and more active with decreasing aspect ratio H/D (with the inner diameter D going larger, or thicker, relative to the height H) of the water storage tank 1, whereas the water convection action in the water storage tank 1 is suppressed more and more (i.e., vertical uniformization of water temperatures in the water storage tank 1 is suppressed more and more) with increasing aspect ratio H/D (with the height H becoming larger relative to the inner diameter D, hence elongation).

Then, the suppression tendency of water convection action becomes noticeable as the aspect ratio of the water storage tank 1 goes beyond about 4.0. It is also shown that with the aspect ratio beyond 4.0, the suppression action of the water convection in the water storage tank 1 gently and gradually decreases at a certain level or lower. From such knowledge shown above, the aspect ratio H/D of the water storage tank 1 is specified as 4.0 or more for the heating and hot water supply apparatus of the first embodiment (for conventional heating and hot water supply apparatuses of the same type, the aspect ratio of the water storage tank 1 is about 2.5).

It is noted that the aspect ratio (H/D) adoptable for the heating and hot water supply apparatus of the first embodiment should preferably be within an upper limit of 8.0 in terms of restraints of manufacture, transport, installation and the like of the water storage tank 1.

In the heating and hot water supply apparatus of the first embodiment, the aspect ratio H/D of the water storage tank 1 is set to 4.0 or more as described above so that the vertical water flow in the water storage tank 1 is suppressed so as to cause a vertical (upper-and-lower) temperature difference of the hot water in the water storage tank 1, i.e., of the stored water W₁ (lower-side portion W_{1b} is lower in temperature than upper-side portion W₁ₐ). However, in the heating and hot water supply apparatus of the first embodiment, in addition to the function by the above hot-water-tank aspect ratio, the vertical temperature difference (upper-side higher and lower-side lower in temperature) creating action for the stored water W₁ in the water storage tank 1 can be facilitated also by a function of the heat exchanger 10 itself in the water tank. Below explained is an actualization of this scheme.

An example of actualization for facilitating the vertical temperature difference creating action for the stored water W₁ by the in-tank heat exchanger 10 will be explained referring to the heating and hot water supply apparatus shown in Fig. 1. In the heating and hot water supply apparatus shown in Fig. 1, a water-supply side pipe line 7 running to the in-tank heat exchanger 10 is vertically provided in a straight pipe shape up to a vicinity of the bottom portion within the water storage tank 1, and a range from a lower end of the water-supply side pipe line 7 to an outlet-side pipe line 8 on an exit side is provided by the in-tank heat exchanger 10, which is a coiled tubular member. The in-tank heat exchanger 10, on the other hand, is formed by connecting an upper-side portion 10A of a relatively large tubular inner diameter and a lower-side portion 10B of a relatively small tubular inner diameter relative to the upper-side portion 10A to each other with a pipe joint 10D. In this case, the flow-through water W₂, i.e. supply hot water flowing through the interior of the in-tank heat exchanger 10 flows at higher velocity in the lower-side portion 10B of a relatively small tubular inner diameter than in the upper-side portion 10A of a relatively large tubular inner diameter, so that the heat exchange action with the lower-side portion W_{1b} of the stored water W₁ in the water storage tank 1 is enhanced. As a result, the endothermic action (heat removal action) in the lower-side portion W_{1b} of the stored water W₁ in the water storage tank 1 becomes greater than the endothermic action (heat removal action) in the upper-side portion W₁ₐ, hence an action that the temperature of the stored water W₁ in the water storage tank 1 becomes lower in the lower-side portion W_{1b} than in the upper-side portion W₁ₐ by the most possible extent.

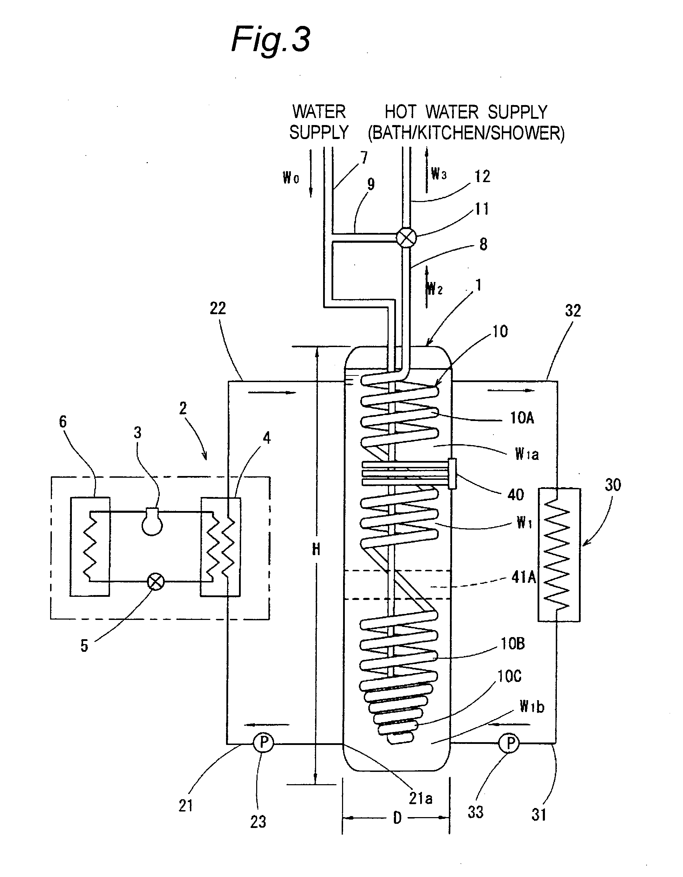

Next, with regard to a heating and hot water supply apparatus of a second embodiment, Fig. 3 shows another example of the actualization for facilitating the vertical temperature difference creating action for the stored water W₁ in the water storage tank 1 by the in-tank heat exchanger 10. The heating and hot water supply apparatus shown in Fig. 3 is similar to the heating and hot water supply apparatus shown in Fig. 1 in that the water-supply side pipe line 7 running to the in-tank heat exchanger 10 is vertically provided in a straight pipe shape up to a vicinity of the bottom portion within the water storage tank 1 while the range from the lower end of the water-supply side pipe line 7 to the outlet-side pipe line 8 on the exit side is provided by the in-tank heat exchanger 10, which is a coiled tubular member. However, in the heating and hot water supply apparatus shown in Fig. 3, the in-tank heat exchanger 10, which is formed as a coiled tubular member, is made higher in coil density (larger in coil turns within an identical height) in its lower-side portion 10B than in its upper-side portion 10A, by which heat exchange action between the stored water W₁ in the water storage tank 1 and the flow-through water (water to be heated) W₂ flowing through within the in-tank heat exchanger 10 becomes greater in the lower-side portion 10B of the heat exchanger 10 than in its upper-side portion 10A. As a result, the endothermic (heat removal) action for the stored water W₁ in the water storage tank 1 is greater in the lower-side portion W_{1b} of the stored water W₁ than in its upper-side portion W₁ₐ so that temperature decreasing action in the lower-side portion W_{1b} of the stored water W₁ in the water storage tank 1 becomes greater than in the upper-side portion W₁ₐ by the most possible extent.

Also in the heating and hot water supply apparatus shown in Fig. 3, a portion (a lowermost end side portion of the lower-side portion 10B) 10C of the in-tank heat exchanger 10 is formed into a spiral shape 10C of small vertical height differences. As a result, the spiral shape portion 10C serves as a resistive member against vertical flow of the stored water W₁ in the water storage tank 1 (uniformization of water temperatures in the water storage tank 1 is thereby suppressed).

In a heating and hot water supply apparatuses according to another embodiment of the invention, in addition to the above-described characteristics, a baffle member for restricting the vertical water flow is provided in the water storage tank 1, by which the heating efficiency by the heat pump unit 2 can be further improved.

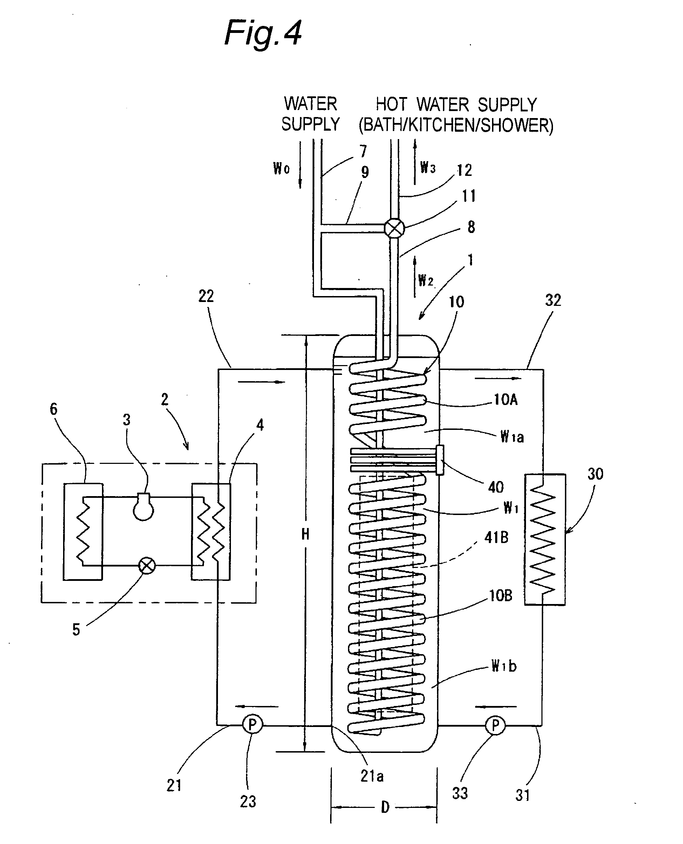

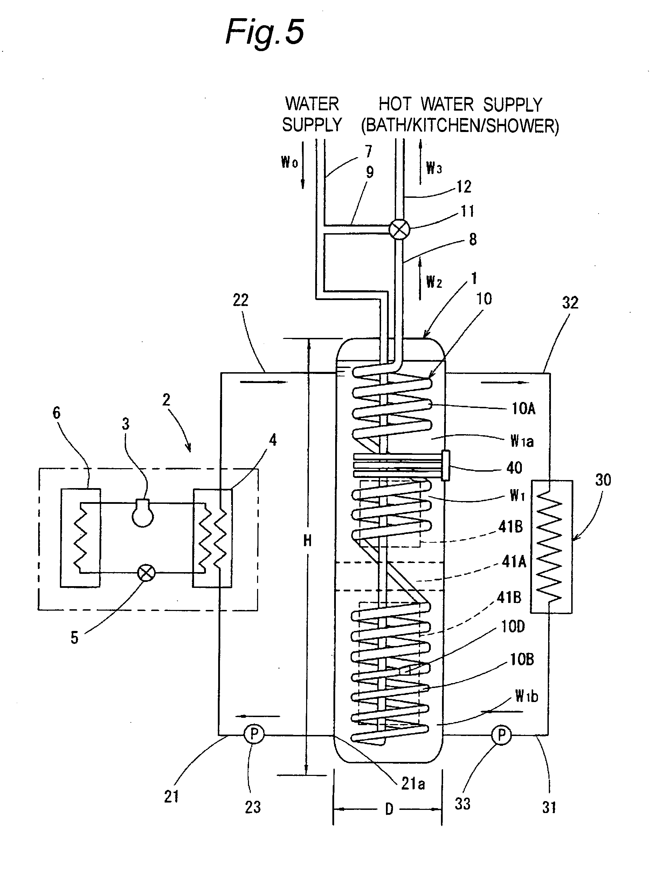

The baffle member may be a transverse plate member 41A that vertically divides the internal space of the water storage tank 1 as illustrated in Figs. 1 and 3, or a vertical plate member 41B that diametrally divides the internal space of the water storage tank 1 as illustrated in Fig. 4, or a combination of the transverse plate member 41A and the vertical plate member 41B as illustrated in Fig. 5.

The transverse plate member 41A illustrated in Figs. 1, 3 and 5 may be a disc-shaped porous plate (or nonporous plate) made of synthetic resin or stainless steel as an example. As to the number of the transverse plate member 41A, only one transverse plate member 41A may be provided at an intermediate height position higher than an opening 21a of the lower-position side water pipe 21 in the water storage tank 1, or a plurality of the transverse plate members 41A may be provided in a multistage fashion.

The vertical plate member 41B illustrated in Figs. 4 and 5 may be a cylindrical-shaped porous plate (or nonporous plate) made of synthetic resin or stainless steel as an example. As to the number of the vertical plate member 41B, only one vertical plate member 41B may be provided at an intermediate height position higher than the opening 21a of the lower-position side water pipe 21 in the water storage tank 1, or a plurality of the vertical plate members 41B may be provided in a concentric form. Functioning of the vertical plate member 41B as a baffle member that restricts the vertical water flow in the water storage tank 1 is based on the condition that the vertical water flow (convection) in the water storage tank 1 is suppressed by the vertical plate member 41B diametrally subdividing the internal space of the water storage tank 1 more than when no vertical plate member 41B is provided.

In addition, in the heating and hot water supply apparatuses shown in Figs. 1, 3, 4 and 5, the lower-side portion 10B side of the in-tank heat exchanger 10 may be formed as an internally grooved tube having good heat exchange action, so that the heat exchange action in the lower-side portion 10B of the in-tank heat exchanger 10 is further facilitated.

Each of the heating and hot water supply apparatuses illustrated in Figs. 1, 3, 4 and 5 includes: a heat pump unit 2 having a compressor 3 for compressing a refrigerant, a radiative heat exchanger 4 for condensing the compressed refrigerant to radiate heat, and an endothermic heat exchanger 6 for evaporating the condensed refrigerant and absorbing heat from the air; and a water storage tank 1 which is connected to the heat pump unit 2 via a lower-position side water pipe 21 and a higher-position side water pipe 22 and in which water W₁ to be heated by the radiative heat exchanger 4 is stored and moreover which is internally provided with a heat exchanger 10 for performing heat exchange with the stored water W₁ to heat flow-through water W₂ flowing through the interior the heat exchanger 10, so that hot water (W₂) heated by the in-tank heat exchanger 10 is made usable for direct supply to the human body as in baths, kitchens, shower baths and the like. Therefore, as compared with conventional heating and hot water supply apparatuses in which the stored water W₁ in the water storage tank 1 that may contain scale even in traces of amount is supplied directly toward the human body, there is provided an effect that hot water can be used hygienically with further less resistance.

Also, since the heating and hot water supply apparatus has an aspect ratio (H/D) of the water storage tank 1 set to 4.0 or more, the vertical water flow in the water storage tank 1 can be suppressed so that the lower-side portion W_{1b} of the stored water W₁ in the water storage tank 1 can be maintained at relatively low temperatures. Thus, there is provided an effect that heat exchange efficiency with the radiative heat exchanger 4 on the heat pump unit 2 side can be improved.

Next, the heating and hot water supply apparatuses according to the first to fourth embodiments will be described in more detail with reference to Figs. 1, 3, 4 and 5.

Each of the heating and hot water supply apparatuses according to the individual embodiments shown in Figs. 1, 3, 4 and 5 includes: a heat pump unit 2 having a compressor 3 for compressing a refrigerant, a radiative heat exchanger 4 for condensing the compressed refrigerant to radiate heat, and an endothermic heat exchanger 6 for evaporating the condensed refrigerant and absorbing heat from the air; and a water storage tank 1 which is connected to the heat pump unit 2 via a lower-position side water pipe 21 and a higher-position side water pipe 22 and in which water W₁ to be heated by the radiative heat exchanger 4 is stored and moreover which is internally provided with a in-tank heat exchanger 10 for performing heat exchange with the stored water W₁ to heat flow-through water W₂ flowing through the interior of the in-tank heat exchanger 10.

Then, in the heating and hot water supply apparatuses of the embodiments shown in Figs. 1, 3, 4 and 5, the aspect ratio H/D (height H to inner diameter D ratio in the water storage tank 1) of the water storage tank 1 is set to 4.0.

Also in the heating and hot water supply apparatuses of the embodiments shown in Figs. 1, 3, 4 and 5, a baffle member in various formations is provided as an additional means for suppressing the vertical water flow in the water storage tank 1.

Figs. 1 and 3 shows embodiments in which a baffle member formed of a transverse plate member 41A is provided in the water storage tank 1. Fig. 4 shows an embodiment in which a baffle member formed of a cylindrical-shaped vertical plate member 41B is provided in the water storage tank 1. Fig. 5 shows an embodiment in which a baffle member formed of a transverse plate member 41A and up-and-down two baffle members formed of cylindrical-shaped vertical plate members 41B are provided in the water storage tank 1.

In the heating and hot water supply apparatuses of the embodiments in Figs. 1, 3 and 5, the transverse plate member 41A is, in many cases, provided by a porous plate made of stainless steel or synthetic resin. However, the transverse plate member 41A does not necessarily need to be a porous plate only if it can suppress the vertical water flow in the water storage tank 1, and may be, for example, a nonporous disc having a diameter slightly smaller than the inner diameter of the water storage tank 1.

In the heating and hot water supply apparatuses of the embodiments in Figs. 4 and 5, the vertical plate member 41B also is, in many cases, provided by a cylindrical member made of stainless steel or synthetic resin. However, the vertical plate member 41B does not necessarily need to be a cylindrical member, and may be a vertical plate member only if it can diametrally subdivide the interior of the water storage tank 1 to suppress the vertical water flow in the water storage tank 1.

With regard to aspects common to the embodiments of Figs. 1, 3, 4 and 5, the water storage tank 1 in the heating and hot water supply apparatuses of those embodiments has an inner diameter D of 350 mm, an inner height H of 1400 mm and a volume of 135L, and an aspect ratio (H/D) of the water storage tank 1 in the heating and hot water supply apparatuses of these embodiments is 4.0. The radiative heat exchanger 4 of the heat pump unit 2 is connected to the water storage tank 1 via the lower-position side water pipe 21 and the higher-position side water pipe 22. The heat pump unit 2 includes a compressor 3 for compressing a refrigerant (CO₂), a radiative heat exchanger 4 for condensing the compressed refrigerant to radiate heat (to heat the stored water W₁ in the water storage tank 1), an expansion mechanism 5 for decompressing the refrigerant condensed by the radiative heat exchanger 4, and an endothermic heat exchanger 6 for evaporating the decompressed refrigerant and absorbing heat from the air.

The stored water W₁ in the water storage tank 1 is fed to the radiative heat exchanger 4 of the heat pump unit 2 by a pump 23, and becomes hot water of 85.0 °C and flows back into the water storage tank 1 as such. The stored water (hot water) W₁ in the water storage tank 1 heats the flow-through water W₂ flowing through the interior of the in-tank heat exchanger 10 provided in the water storage tank 1, while being fed by a pump 33 toward a heating-use radiator 30 connected by pipe lines 31, 32, thus being usable also as a heating-use heat source. In the heating and hot water supply apparatuses of the embodiments, the radiator 30 feeds hot water of 85.0 °C at a rate of 15.0 L/m, as an example, for fulfillment of indoor heating.

The in-tank heat exchanger 10 is formed of a coiled tubular member continuing to the water-supply side pipe line 7 vertically provided up to a vicinity of the bottom portion within the water storage tank 1, the coiled tubular member continuing to an outlet-side pipe line 8 on an upper end side of the heat exchanger 10. Supply water W₀ flowing in from the water-supply side pipe line 7, while flowing through the in-tank heat exchanger 10, is heat-exchanged with the stored water W₁ in the water storage tank 1 to become hot water (heated water) W₂ of 85°C, thus being taken out through the outlet-side pipe line 8. The water-supply side pipe line 7 and the outlet-side pipe line 8 arse connected to each other via a bypass pipe 9 and a thermo valve 11, and supply hot water W₃ of 42.0°C is taken out through a hot water supply pipe 12 by action of the thermo valve 11. It is noted that reference sign 40 in Figs. 1, 3, 4 and 5 denotes an electric heater serving as an auxiliary heat source.

Next, unique constructions of the heat exchangers 10 in the water tank in the individual embodiments shown in Figs. 1, 3, 4 and 5 are explained. In the heating and hot water supply apparatuses of the embodiments shown in Figs. 1 and 5, the portion (lower-side portion) 10B of the in-tank heat exchanger 10 formed of a coiled tubular member is made smaller in tubular inner diameter than the upper-side portion 10A, so that the flow-through water W₂ flows within the in-tank heat exchanger 10 at a higher flow velocity in the lower-side portion 10B than in the upper-side portion 10A. As a result, the heat exchange action (heat removal action) for the lower-side portion W_{1b} of the stored water W₁ in the water storage tank 1 becomes greater than that for the upper-side portion W₁ₐ.

Next, the construction of the in-tank heat exchanger 10 in the heating and hot water supply apparatus of the embodiment shown in Fig. 3 will be explained. The in-tank heat exchanger 10 in this embodiment is so arranged and configured that a lower end portion 10C of the lower-side portion 10B of the coiled tubular member is made larger in coil density (smaller in coil interval and formed into a spiral shape) than the upper-side portion 10A of the heat exchanger in the water tank. As a result, the endothermic action (heat removal action) from the lower-side portion W_{1b} of the stored water by the largeness of the coil density itself becomes greater in the lower end portion (spiral shape portion) 10C of the heat exchanger in the water tank, so that the temperature decreasing action for the lower-side portion W_{1b} of the stored water becomes greater. Moreover, the spiral shape portion 10C acts to suppress the vertical water flow in the water storage tank 1 so that the lower-side portion W_{1b} of the stored water in the water storage tank 1 is maintained as low temperatures as possible.

Furthermore, additional constructions of the in-tank heat exchanger 10 in the heating and hot water supply apparatuses of the embodiments shown in the individual figures will be explained. In the heating and hot water supply apparatuses of the embodiments shown in the figures, an internally grooved tube may be provided over a certain range from the lower end side of the lower-side portion 10B of the in-tank heat exchanger 10 formed of a coiled tubular member so as to enhance the heat exchange action (heat removal action) for the lower-side portion W_{1b} of the stored water in the vicinity of the above range portion.

Also, with reference to Figs. 1, 3, 4 and 5, in the heating and hot water supply apparatuses of the first to fourth embodiments, the stored water W₁ in the water storage tank 1 may be boiled up by the heat pump unit 2 so as to be hot water, and then fed to the heating-use radiator 30, so that heat of the resulting hot water can be supplied to the heating-use radiator 30 efficiently without passing through the heat exchanger. Thus, the heating and hot water supply apparatuses are enabled to fulfill enough heating in such regions of high heating loads as Nordic countries where 24-hour heating operation is involved in winter.

## Claims

1. A heating and hot water supply apparatus comprising:
a heat pump unit (2);
a hot water tank (1) for storing therein hot water heated by the heat pump unit (2);
an in-tank heat exchanger (10) placed in the hot water tank (1) and arranged and configured such that supply hot water flows through an interior of the in-tank heat exchanger; and
circulation circuits (31, 32) for circulating the hot water stored in the hot water tank (1) such that the hot water passes through a heating terminal (30) outside the hot water tank (1) and thereafter returns into the hot water tank (1).

2. The heating and hot water supply apparatus as claimed in Claim 1, wherein
the hot water tank (1) is a cylindrical-shaped member and an aspect ratio (H/D) of the hot water tank, which is a ratio of an inner height (H) to an inner diameter (D) of the hot water tank (1), is 4.0 or more.

3. The heating and hot water supply apparatus as claimed in Claim 1 or 2, wherein
the in-tank heat exchanger (10) is so arranged and configured that temperature of stored water (W₁) stored in the hot water tank (1), which temperature varies due to heat exchange between the stored water (W₁) and flow-through water (W₂) flowing through the interior of the in-tank heat exchanger (10), is lower in a lower side in the hot water tank (1) and higher in an upper side in the hot water tank (1).

4. The heating and hot water supply apparatus as claimed in Claim 3, wherein
the in-tank heat exchanger (10) is formed of a tubular member, and a lower-side portion (10B) of the in-tank heat exchanger (10) is smaller in tubular inner diameter than an upper-side portion (10A) of the in-tank heat exchanger (10) and an in-tube water flow velocity of the lower-side portion (10B) is higher than an in-tube water flow velocity of the upper-side portion (10A).

5. The heating and hot water supply apparatus as claimed in Claim 3 or 4, wherein
a lower-side portion (10B) of the in-tank heat exchanger (10) is formed of an internally grooved tube.

6. The heating and hot water supply apparatus as claimed in Claim 3, 4 or 5, wherein
the in-tank heat exchanger (10) is formed of a coiled tubular member, and a coil density of a lower-side portion (10B) of the in-tank heat exchanger (10) is higher than a coil density of an upper-side portion (10A) of the in-tank heat exchanger (10).

7. The heating and hot water supply apparatus as claimed in any one of Claims 3 to 6, wherein
the in-tank heat exchanger (10) is formed of a coiled tubular member, and a portion of the coiled tubular member is formed into a spiral shape in a vertical direction, the spiral shape having a height difference smaller than a tubular outer diameter, such that the spiral shape portion (10C) serves as a resistive member against vertical flow of the stored water (W₁) stored in the hot water tank (1).

8. The heating and hot water supply apparatus as claimed in any one of Claims 1 to 7, wherein
a baffle member (41A, 41B) for restricting vertical water flow in the hot water tank (1) is provided at an intermediate height position higher than an opening (21a) for a lower-position side water pipe (21) in the hot water tank (1).

9. The heating and hot water supply apparatus as claimed in Claim 8, wherein
the baffle member (41A) comprises a transverse plate member (41A) for vertically dividing an internal space of the hot water tank (1).

10. The heating and hot water supply apparatus as claimed in Claim 8, wherein
the baffle member (41B) comprises a vertical plate member (41B) for diametrally dividing an internal space of the hot water tank (1).

11. The heating and hot water supply apparatus as claimed in Claim 8, wherein
the baffle member (41A, 41B) comprises a transverse plate member (41A) for vertically dividing an internal space of the hot water tank (1) and a vertical plate member (41B) for diametrally dividing the internal space of the hot water tank (1).
